# FASCICULE DE BREVET EUROPEEN

(11) **EP 1 252 067 B1**
(45) Date de publication et mention de la délivrance du brevet: **30.06.2004**
(21) Numéro de dépôt: 01911537.7
(22) Date de dépôt: 26.01.2001
(51) Int. Cl.: B65B 63/00, B65B 1/20, B65G 69/02

(54) **PROCEDE ET APPAREIL DE STOCKAGE DE PREFORMES PLASTIQUES DANS UN CONTENEUR**
VERFAHREN UND VORRICHTUNG ZUM SPEICHERN VON KUNSTSTOFFVORFORMLINGEN IN EINEM BEHÄLTER
METHOD AND APPARATUS FOR STORING PLASTIC PREFORMS IN A CONTAINER

(30) Priorité: 28.01.2000 FR 0001122
(43) Date de publication de la demande: 30.10.2002
(73) Titulaire: AMCOR LIMITED, Abbotsford, Victoria 3067 (AU)
(72) Inventeur: WALLIS, Andrew, GB-OX1 27 NN Oxfordshire (GB)
(74) Mandataire: Matkowska, Franck
(86) Numéro de dépôt international: PCT/EP2001/000850
(87) Numéro de publication internationale: WO 2001/054987

(56) Documents cités:
- EP-A- 0 372 628
- DE-A- 3 340 457
- US-A- 5 465 822

## Description

La présente invention concerne le domaine du stockage en vrac de préformes plastiques dans un container, en vue de leur manutention et de leur transport.

Les récipients en polyester, tel que par exemple les bouteilles en PET (Polytéréphtalate d'éthylène), sont de manière connue fabriqués en deux étapes successives : dans une première étape on réalise une préforme en plastique par injection d'une ou plusieurs résines thermoplastiques dans un moule ; dans une seconde étape la préforme est soufflée et étirée dans un moule de soufflage en sorte de former le récipient. Ces deux étapes ne sont pas nécessairement réalisées en ligne immédiatement l'une après l'autre, voir même peuvent être réalisées sur des sites de production différents. Dans ce cas, il s'avère nécessaire de stocker les préformes sur leur lieu de production, en vue de leur acheminement ultérieur jusqu'à la machine de soufflage, située éventuellement sur un autre site de production distant de celui de production des préformes.

Une première méthode de stockage connue consiste à remplir un container avec des préformes en vrac. Ce container peut être réalisé dans des matériaux divers (métal, carton,...), et peut avoir des formes et des dimensions variées. Les préformes sont introduites par le haut en tombant par gravité à l'intérieur du container ouvert. Dans le but de réduire les chocs mécaniques subies par les préformes lors de leur introduction dans le container, des équipements spéciaux ont été développés afin d'adapter automatiquement la hauteur de chute des préformes par rapport au tas de préformes formé dans le container, en sorte de limiter cette hauteur de chute.

L'inconvénient majeur de cette méthode de stockage en vrac est une mauvaise utilisation du volume de stockage du container, ce qui se traduit par une faible densité de stockage, c'est-à-dire un faible nombre de préformes stockées par unité de volume. En pratique, on observe d'ailleurs la formation, en partie supérieur du tas de préformes en vrac, d'un dôme convexe, qui est caractéristique de cette mauvaise utilisation du volume de stockage. Or pour des raisons économiques évidentes, liées principalement aux coûts de transport des préformes, il est bien entendu préférable que les volumes de stockage soient les plus faibles possibles, dans le but notamment de pouvoir transporter un plus grand nombre de préformes avec un nombre donné de containers.

Dans le but d'améliorer la densité de stockage de préformes dans un container, on a déjà proposé par le passé de réaliser un stockage ordonné des préformes, sous la forme d'un empilement de préformes avec orientation des préformes de telle sorte que les préformes d'une rangée donnée soit orientées en sens inverses des préformes d'une rangée adjacente. Cette solution est décrite notamment dans le brevet US-A-5,555,706 délivré aux Etats-Unis. Cette solution permet certes d'optimiser le volume occupé par les préformes à l'intérieur du container, comparativement à un stockage en vrac. Cependant, elle présente l'inconvénient de nécessiter un équipement spécial complexe et onéreux pour le rangement des préformes dans le container.

La présente invention a pour but de proposer une nouvelle solution de stockage de préformes dans un container qui permet d'augmenter la densité de stockage (nombre de préformes par unité de volume) comparativement à la méthode connue de stockage en vrac, et qui soit plus simple de mise en oeuvre que la méthode de stockage décrite dans le brevet US-A-5,555,706 précité.

Ce but est atteint par la méthode de l'invention pour le stockage de préformes dans un container. De manière essentielle selon l'invention, on traite la face externe des préformes en sorte de rendre cette face externe plus glissante, et on stocke les préformes en vrac dans un container, la face externe des préformes après traitement présentant un coefficient de frottement suffisamment faible pour que la densité de stockage (nombre de préformes stockées par unité de volume) soit strictement supérieure à la densité de stockage qui aurait été obtenue dans les mêmes conditions avec des préformes non traitées.

L'invention a également pour autres objets un procédé de fabrication et de stockage de préformes plastiques, un appareil pour le stockage de préformes plastiques, et une installation de fabrication et de stockage de préformes plastiques.

D'autres caractéristiques et avantages de l'invention apparaîtront plus clairement à la lecture de la description ci-après de deux exemples préférés de mise en oeuvre de l'invention, laquelle description est donnée à titre d'exemple non limitatif et en référence aux dessins annexés sur lesquels :
- la figure 1 est une vue d'ensemble d'une première variante préférée de réalisation d'une installation de fabrication et de stockage de préformes plastiques, conforme à l'invention,
- la figure 2 est une vue de face du réceptacle de traitement et de la buse de pulvérisation de l'appareil de stockage de l'installation de la figure 2,
- la figure 3 représente une préforme plastique issue de la machine de d'injection de l'installation de la figure 1,
- et la figure 4 est une représentation schématique d'une seconde variante préférée de réalisation d'une installation de fabrication et de stockage de préformes plastiques, conforme à l'invention,

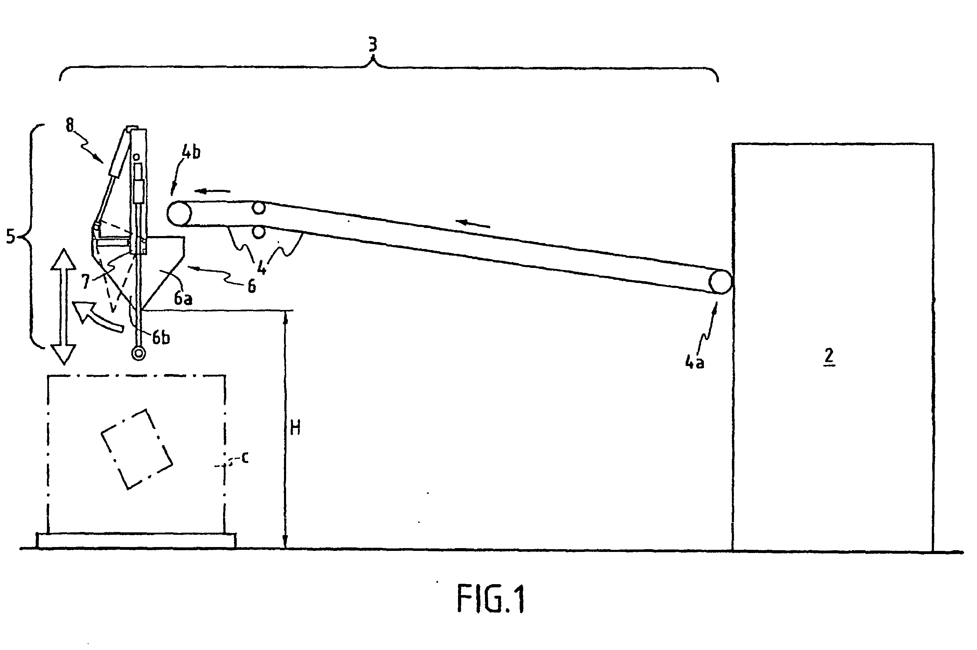

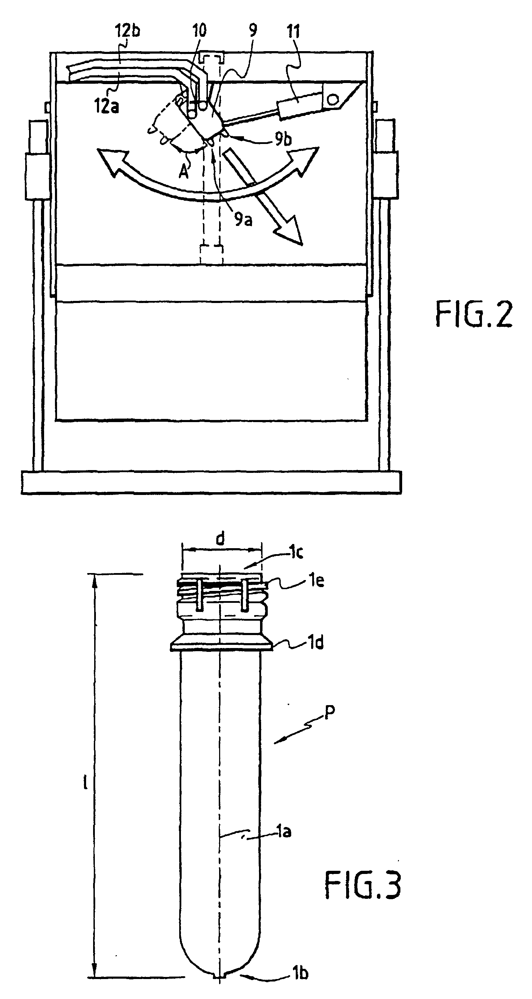

La figure 1 représente une variante préférée de réalisation d'une installation de fabrication et de stockage dans un container (C) de préformes en polyester, et par exemple eh PET, du type de celle (P) illustrée sur la figure 3. De manière usuelle, les préformes, qui sont fabriquées et stockées en ligne dans le container (C), sont ensuite acheminées jusqu'à une machine de soufflage, permettant de fabriquer de manière connue en soi des bouteilles plastiques, par étirage et soufflage des préformes dans un moule de soufflage. Lorsque la machine de soufflage est située sur un site industrielle distant de celui de fabrication des préformes, les containers (C) contenant les préformes sont transportés par tout moyen de transport connu et par exemple en étant chargés sur des camions pour leur acheminement par la route.

Si l'on se réfère à la figure 3, une préforme (P) présente de manière usuelle une forme générale tubulaire, d'axe central 1a, fermée à une première extrémité 1b, et ouverte à l'extrémité opposée 1c. La préforme comporte en outre une collerette 1d qui permet notamment son maintien en position dans le moule de soufflage. Dans l'exemple particulier illustré, dans la portion de la préforme située au dessus de la collerette 1d et formant ultérieurement le goulot de la bouteille, est ménagé un pas de vis 1e permettant ultérieurement le vissage d'un bouchon pour la fermeture de la bouteille formée à partir de la préforme. Dans une autre variante, la préforme pourrait toutefois ne pas comporter de pas de vis, son goulot étant par exemple conformé au niveau de son bord libre en sorte de permettre le montage à force d'une capsule.

En référence à la figure 1, l'installation de fabrication et de stockage de préformes comprend une machine d'injection 2 de préformes plastiques qui est montée en ligne avec un appareil de stockage 3 réalisé conformément à une variante préférée de réalisation décrite en détail ci-après.

La machine d'injection 2 est connue en soi et ne sera donc pas détaillée dans la présente description. Elle met en oeuvre de manière usuelle un moule à (n) cavités, et permet de fabriquer en parallèle à chaque cycle d'injection, un lot de (n) préformes plastiques. Selon le cas, le moule pourra comporter un nombre (n) plus ou moins important de cavités, sachant que plus le nombre de cavités est important et plus la cadence de production de préformes est élevée.

L'appareil de stockage 3 comprend un convoyeur 4, dont la partie extrême amont 4a est positionnée au niveau de la sortie de la machine d'injection 2, et permet ainsi de réceptionner les lots de (n) préformes qui sont successivement éjectées de la machine 2 à la fin de chaque cycle d'injection, après ouverture du moule. Le convoyeur 4 permet d'acheminer successivement chaque lots de (n) préformes jusqu'à un équipement 5 ayant deux fonctions : la première fonction est la pulvérisation d'un matériau lubrifiant sur chaque lot de (n) préformes ; la seconde fonction est de permettre l'introduction par gravité et en chute libre dans le container (C) de chaque lot de (n) préformes lubrifiées, la hauteur de chute des préformes étant réglable. A cet effet, l'équipement 5 comprend un réceptacle de traitement 6 au dessous duquel est destiné à être placé le container (C), et des moyens permettant la pulvérisation d'un matériau lubrifiant sur un lot de préformes contenues temporairement dans le réceptacle de traitement 6.

Plus particulièrement, le réceptacle de traitement 6 est ouvert en partie supérieure, présente un fond escamotable en sorte de permettre la chute des préformes, et peut être réglé en position verticalement (réglage de la hauteur H de chute des préformes). Dans l'exemple particulier illustré ce réceptacle de traitement est formé de deux mâchoires 6a, 6b , dont l'une au moins 6b est montée pivotante selon un axe sensiblement horizontal 7, et est équipée d'un vérin 8 permettant de la faire pivoter entre une première position (illustrée en trait plein sur la figure 1 ) dans laquelle elle forme avec l'autre mâchoire 6a un réceptacle à fond fermé, et une seconde position escamotée (illustrée en pointillés sur la figure 1) dans laquelle elle forme avec l'autre mâchoires 6a un réceptacle 6 à fond ouvert. Dans une autre variante, les deux mâchoires 6a, 6b pourraient être montées pivotantes, pour l'ouverture du fond du réceptacle 6.

L'extrémité aval 4b du convoyeur 4 est positionnée au dessus et à l'aplomb du réceptacle de traitement 6 de telle sorte que les préformes qui sont acheminées par le convoyeur 4 depuis la sortie de la machine d'injection 2, lorsqu'elles arrivent en fin de convoyeur au niveau de l'extrémité aval 4b, sont évacuées par gravité du convoyeur 4 et tombent à l'intérieur du réceptacle de traitement 6.

Les moyens de pulvérisation d'un matériau lubrifiant sur le lot de (n) préformes contenues temporairement dans le réceptacle de traitement 6 comprennent une tête de pulvérisation 9 ( figure 2) qui comporte deux buses de pulvérisations 9a et 9b, et qui est montée au-dessus du réceptacle de traitement 6. Dans une autre variante, la tête de pulvérisation 9 pourrait ne comporter qu'une seule buse de pulvérisation, ou au contraire plus de deux buses de pulvérisation. Dans l'exemple illustrée, cette tête de pulvérisation 9 est montée pivotante selon un axe 10 sensiblement horizontal, et est positionnée sensiblement à l'aplomb du centre du réceptacle de traitement 6. Cette tête 9 est équipée d'un vérin 11, qui permet de la faire pivoter faire son axe de rotation 10, et qui est commandé en sorte d'animer la tête de pulvérisation 9, et par conséquent les deux buses de pulvérisations 9a et 9b, d'un mouvement de rotation alternatif d'angle limité (A), entre deux positions extrêmes illustrées respectivement en trait plein et en pointillés sur la figure 2. L'angle (A) de rotation de la tête de pulvérisation 9 est réglé en sorte de pouvoir effectuer avec les jets de pulvérisation issus des buses 9a et 9b un balayage de tout le fond du respectable. 6.

Les buses de pulvérisation 9a et 9b sont alimentées en parallèle avec un liquide lubrifiant sous pression, au moyen respectivement de deux canalisations d'alimentation souples 12a et 12b, qui sont raccordée à un réservoir de liquide lubrifiant (non représenté) via une pompe (non représentée).Les vérins 8 et 11 et la pompe pour l'alimentation de la buse de pulvérisation 9 sont commandés au moyen d'un automate programmable industriel (non représenté) en synchronisme avec le temps de cycle de la machine d'injection 2 en sorte d'obtenir le fonctionnement qui va à présent être décrit.

Le procédé de l'invention mis en oeuvre au moyen de l'installation de la figure 1 se déroule selon un cycle itératif comprenant les opérations successives(a) à (c) décrites ci-après, chaque cycle correspondant à la fabrication et au stockage en ligne d'un lot de (n) préformes. Pendant toute la durée du procédé, le convoyeur 4 est en marche continu, son tablier étant entraîné à une vitesse linéaire sensiblement constante prédéterminée. Préalablement au démarrage du premier cycle, un container ouvert (C) vide a été positionné au-dessous du réceptacle de traitement 6.

### (a) fabrication et transport d'un lot de (n) préformes

La machine d'injection 2 fabrique un lots de (n) préformes selon un cycle de fonctionnement qui lui est propre Les (n) préformes sont réceptionnées sur le convoyeur 4, en sortie de la machine d'injection 2 après ouverture du moule. Les (n) préformes sont acheminées en vrac par le convoyeur4 à une vitesse prédéterminée jusqu'à l'aplomb du réceptacle de traitement 6, à l'intérieur duquel elles tombent par gravité. A ce stade, le fond du réceptacle 6 est fermé, la mâchoire 6b étant dans la position illustrée en trait plein sur la figure 1.

### (b) traitement (lubrification) du lot de (n) préformes

Le vérin 11 est commandé automatiquement en sorte de faire pivoter la tête de pulvérisation 9 selon le mouvement alternatif précédemment décrit, tandis que parallèlement les deux buses de pulvérisation 9a et 9b sont alimentées sous pression avec le liquide lubrifiant sous pression. On réalise ainsi une pulvérisation d'un liquide lubrifiant sur le lot de (n) préformes contenues en vrac dans le réceptacle 6. La quantité de liquide lubrifiant est réglable, et dépend du débit de la pompe de pulvérisation et de la durée de pulvérisation, la buse de pulvérisation pouvant effectuer selon le cas un nombre plus ou moins important d'aller et retour entre ses deux positions extrêmes. Le déclenchement du cycle de pulvérisation peut être périodique et fixé en fonction de la durée du cycle de la machine d'injection 2, et/ou être conditionné par la détection au moyen d'un capteur de la présence de préformès dans le fond du réceptacle de traitement 6.

### (c) chute du lot de (n) préformes traitées dans le container (C)

Une fois l'étape (b) de pulvérisation achevée, le vérin 8 est commandé automatiquement en sorte de permettre l'escamotage de la mâchoire 6b dans sa position illustrée en pointillés sur la figure 1 (ouverture du fond du réceptacle de traitement 6). Le lot de (n) préformes contenues dans le réceptacle est ainsi évacué par gravité immédiatement après le traitement de pulvérisation , les préformes chutant à l'intérieur du container ouvert (C).

Le cycle constitué par les étapes (a), (b) et (c) ci-dessus est répété automatiquement jusqu'à remplissage du container avec un nombre de préformes prédéterminé.

Au cours de leur stockage dans le container ouvert (C), les préformes s'accumulent sous la forme d'un tas de préformes en vrac. Grâce à la pulvérisation du lubrifiant, les préformes sont rendues plus glissantes les unes par rapport aux autres (leur face externe présentant un coefficient de friction plus faible). On constate ainsi en pratique que les préformes au sein du tas en vrac ont tendance naturellement à se positionner et à s'orienter en glissant les unes par rapport aux en sorte d'occuper le moins de volume possible. On améliore ainsi la densité de stockage (nombre de préformes par unité de volume) Ceci se traduit en pratique par un auto-nivellement de la surface du tas de préformes en vrac, contrairement à un tas de préformes en vrac non traitées, dont la surface se caractérise par une forme de dôme convexe.

Dans un exemple précis de réalisation donné à titre indicatif et non limitatif de l'invention, le procédé de fabrication et de stockage précédemment décrit en référence aux figures 1 à 3 a été mis en oeuvre en pulvérisant sur les préformes un matériau lubrifiant constitué par une huile silicone alimentaire à l'état liquide, pulvérisée à une température d'environ 20°C. Il s'agissait plus particulièrement d'une huile silicone commercialisée par la société RHODIA CHIMIE sous la dénomination commerciale SILBIONE® OIL 70047 V350, présentant à 25°C une viscosité de 350 mm²/s (+/- 5%) et une tension de surface à 25°C valant approximativement 21,1 nN/m. Les préformes était injectées en PET, avaient un diamètre externe d ( figure 3) valant 28mm et une longueur l valant 150mm. Elles étaient fabriquées par lots successifs de 48 préformes. A chaque lot de 48 préformes était pulvérisé dans le réceptacle environ 0,27 g d'huile silicone. Le container utilisé présentait une section octogonale dont les huit cotés avaient respectivement pour longueurs 300mm, 740mm, 300mm, 550mm, 300mm, 740mm, 300mm et 550mm et une hauteur de 1 m et était rempli jusqu'en haut avec un nombre de 6700 préformes. Le niveau de remplissage était contrôlé par un contrôle visuel de la hauteur de remplissage.

A titre de comparatif, un container identique a été rempli avec des préformes PET (non traitées avec un lubrifiant) et dans les même conditions de stockage (utilisation de l'installation de la figure 1 avec la même hauteur de chute des préformes et sans pulvérisation d'un matériau lubrifiant au moyen de la buse de pulvérisation ). Le niveau de remplissage du container était atteint avec un nombre de 5800 préformes. Ce niveau de remplissage était considéré comme étant atteint lorsque le point le plus haut de la surface (dôme convexe) du tas de préformes atteignait le niveau de remplissage du container. La densité de stockage des préformes traitées était par conséquent d'environ 16% supérieure à celle obtenue dans les mêmes conditions avec des préformes non traitées.

L'invention n'est pas limitée à la mise en oeuvre de l'exemple particulier d'huile silicone précité, mais s'étend d'une manière plus générale à tout traitement de lubrification de tout ou partie d'au moins la face externe des préformes en vue d'obtenir un coefficient de frottement de cette face externe qui et suffisamment faible pour augmenter le nombre de préformes stockées en vrac dans un volume donnée. De préférence, le matériau lubrifiant est choisi et appliqué sur les préformes de telle sorte que la densité de stockage des préformes soit supérieure d'au moins 10%, et de préférence d'au moins 15% à la densité de stockage qui aurait été obtenue dans les mêmes conditions avec des préformes non traitées.

Parmi les autre matériaux lubrifiants susceptibles d'être utilisés, on peut citer de manière non exhaustive les huiles végétales avec agent émulsifiant du type E322, qui sont couramment utilisées dans l'industrie alimentaire, ou encore un mélange d'huile et de cire végétales incorporant un agent émulsifiant (E322) et au moins un agent antioxydant (E306).

L'application du matériau lubrifiant n'est pas nécessairement réalisée par pulvérisation, mais ce matériau pourrait également dans une autre variante être appliqué par immersion des préformes dans un bain de matériau lubrifiant ou encore par enduction des préformes avec matériau lubrifiant.

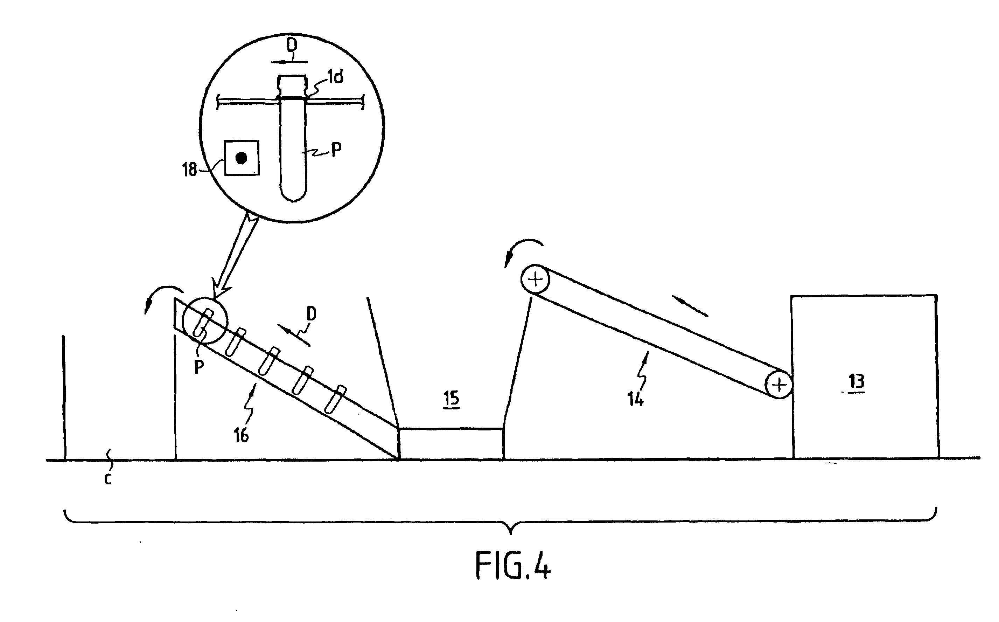

Egalement, le traitement de lubrification peut être réalisé non pas sur un lot de plusieurs préformes, mais individuellement sur chaque préforme, par exemple au moyen de l'installation de la figure 4. Cette installation comprend une unité 13 de fabrication de préformes par injection-moulage (machine d'injection mettant en oeuvre de manière usuelle un moule à une ou plusieurs cavités), qui es téquipée en sortie d'un appareil 3' permettant l'application d'un matériau lubrifiant sur les préformes et le stockage des préformes lubrifiées dans un container C. Cet appareil 3' comprend un convoyeur 14, qui permet d'acheminer en vrac les préformes fabriquées en sortie de l'unité 13, jusqu'à une machine 15 de rangement de préformes, plus communément appelée « unscrambler ». Cette machine 15, par ailleurs connue de l'homme du métier, comprend une trémie (ou réceptacle) dans laquelle les préformes sont introduites en vrac par gravité, et délivre en sortie les préformes les unes après les autres, chaque préforme étant orientée dans une position prédéterminée (collerette vers le haut dans l'exemple de la figure 4). En sortie de cette machine 15, les préformes P sont acheminées individuellement et en ligne (direction de transport indiquée par la flèche D) au moyen d'un système de transfert 16 (connu en soit), qui permet de transporter les préformes P individuellement jusqu'au container de stockage C, en maintenant l'orientation de chaque préforme. Au niveau de ce système de transfert 16 est montée une buse (ou un ensemble de buses) de pulvérisation 18, alimentée avec un matériau lubrifiant tel que par exemple une huile silicone. Cette buse 18 est positionnée sur le trajet des préformes P au dessous du niveau de la collerette 1d des préformes P. En fonctionnement, chaque préforme P est acheminée par le système de transfert 16 et passe devant la buse de pulvérisation 18 en étant orientée dans la position illustrée sur la figure 4. La buse de pulvérisation 18 génère en direction de la chaque préforme successive un jet de pulvérisation, qui permet de lubrifier la surface externe du corps de la préforme P, uniquement dans sa portion s'étendant au dessous de la collerette 1d de la préforme P. Il peut s'agir d'un jet de pulvérisation continu, ou au contraire discontinu déclenché par un capteur détectant la présence de la préforme à lubrifier. Après lubrification, chaque préforme est évacuée automatiquement par gravité du système de transfert 16, et chute à l'intérieur du container C. Le principal avantage de la variante de la figure 4 est qu'elle permet d'éviter que le matériau lubrifiant ne pénètre à l'intérieur des préformes.

Afin d'augmenter encore la densité de stockage des préformes lubrifiées contenues dans le container (C) des variantes des figures 1 ou 4, on peut également de manière avantageuse faire subir au container (C) des secousses mécaniques, en le faisant vibrer et/ou osciller, ce qui a pour effet de diminuer le volume occupé par les préformes à l'intérieur du container. On pour a cet effet utiliser une plate-forme vibrante et/ou oscillante sur laquelle sera positionnée le container (C). Un exemple d'appareil vibratoire pouvant être utilisé est notamment décrit dans la demande de brevet internationale WO-A-9518043.

## Revendications

1. Procédé de stockage de préformes plastiques (P) dans un container (C) **caractérisé en qu'**on traite la face externe des préformes en sorte de rendre cette face externe plus glissante, et on stocke les préformes en vrac dans le container (C), la face externe des préformes après traitement présentant un coefficient de frottement suffisamment faible pour que la densité de stockage (nombre de préformes stockées par unité de volume) soit strictement supérieure à la densité de stockage qui aurait été obtenue dans les mêmes conditions avec des préformes non traitées.

2. Procédé selon la revendication 1 **caractérisé en ce que** la face externe des préformes après traitement présente un coefficient de frottement suffisamment faible pour que la densité de stockage (nombre de préformes stockées par unité de volume) soit supérieure d'au moins 10%, et de préférence d'au moins 15% à la densité de stockage qui aurait été obtenue dans les mêmes conditions avec des préformes non traitées.

3. Procédé selon la revendication 1 ou 2 **caractérisé en ce que** l'étape de traitement des préformes consiste à appliquer sur toute ou partie de la face externe des préformes un matériau lubrifiant.

4. Procédé selon la revendication 2 **caractérisé en ce que** le matériau est choisi parmi le groupe : huile silicone, huile végétale incorporant au moins un agent émulsifiant, mélange huile et cire végétales incorporant au moins un agent émulsifiant et au moins un agent antioxydant.

5. Procédé selon la revendication 4 **caractérisé en ce que** le matériau est appliqué sous forme liquide.

6. Procédé selon l'une quelconque des revendications 3 à 5 **caractérisé en ce que** la méthode d'application du matériau est choisie parmi le groupe : pulvérisation, enduction, immersion.

7. Procédé selon la revendication 6 **caractérisé en ce que** les préformes sont traités par lots successifs de (n) préformes en vrac, et par pulvérisation d'un matériau lubrifiant sur chaque lot successif de (n) préformes en vrac.

8. Procédé selon la revendication 7 **caractérisé en ce que** chaque lot successif de (n) préformes est acheminé en vrac au moyen d'un convoyeur (4) jusqu'à un réceptacle de traitement (6) positionné au-dessus du container (C) de stockage des préformes, **en ce qu'**à chaque nouveau lot de préformes en vrac contenu dans le réceptacle intermédiaire on effectue une pulvérisation d'un matériau lubrifiant sur les préformes en vrac de ce lot, et à l'issue de la pulvérisation on ouvre le fond du réceptacle de telle sorte que le lot de préformes chute par gravité à l'intérieur du container.

9. Procédé selon la revendication 3 **caractérisé en ce qu'**on achemine individuellement chaque préforme (P) jusqu'au container (C), en maintenant chaque préforme orientée dans une position donnée, et **en ce qu'**avant introduction de chaque préforme dans le container (C) on applique le matériau lubrifiant sur la préforme (P) orientée, uniquement sur la portion de la préforme (P) s'étendant au dessous de la collerette (1d) de la préforme.

10. Procédé selon l'une quelconque des revendications 1 à 9 **caractérisé en ce que** les préformes sont introduites dans le container (C) immédiatement après l'étape de traitement.

11. Procédé selon l'une quelconque des revendications 1 à 10 **caractérisé en ce qu'**on fait vibrer et/ou osciller le container en sorte de diminuer le volume occupé par le préformes stockées dans le container.

12. Procédé de fabrication et de stockage de préformes plastiques (P) **caractérisé en ce qu'**on fabrique en série des préformes en plastiques injectées, et **en ce que** au fur et à mesure de la fabrication des préformes on stocke en ligne les préformes dans un container (C) conformément au procédé visé à l'une quelconque des revendications 1 à 11.

13. Appareil (3) pour le stockage de préformes plastiques (P) dans un container (C) **caractérisé en ce qu'**il comprend un réceptacle (6) pour le traitement des préformes, qui est ouvert en partie supérieure, et dont le fond est en tout ou partie escamotable sur commande, un convoyeur (4) dont l'extrémité aval (4b) est positionnée au dessus du réceptacle de traitement (6), et qui a pour fonction d'acheminer une ou plusieurs préformes automatiquement jusqu'au réceptacle de traitement, au moins une buse de pulvérisation (9a) d'un matériau lubrifiant montée au dessus du réceptacle de traitement.

14. Appareil selon la revendication 13 **caractérisé en ce que** la buse de pulvérisation est alimentée avec un matériau lubrifiant choisi parmi le groupe : huile silicone, huile végétale incorporant au moins un agent émulsifiant, mélange huile et cire végétales incorporant au moins un agent émulsifiant et au moins un agent antioxydant.

15. Appareil selon la revendication 14 **caractérisé en ce que** chaque buse de pulvérisation (9a ; 9b) est conçue pour être animée d'un mouvement de rotation alternatif selon un axe sensiblement horizontal (10) et d'angle (A) limité.

16. Appareil (3') pour le stockage de préformes plastiques (P) dans un container (C) **caractérisé en ce qu'**il comprend une machine (15) de rangement de préformes, qui est conçue pour être alimentée avec des préformes en vrac et pour délivrer en sortie les préformes les unes après les autres, de telle sorte que chaque préforme est orientée dans une position prédéterminée, un système de transfert (16), qui permet de reprendre les préformes (P) en sortie de la machine de rangement (15) et de les acheminer individuellement jusqu'au container (C), en maintenant l'orientation de chaque préforme, et des moyens (18) de pulvérisation d'un matériau lubrifiant, qui sont positionnés sur le trajet des préformes en sorte de permettre l'application du matériau lubrifiant sur chaque préforme (P) orientée, uniquement sur la portion de la préforme (P) s'étendant au dessous de la collerette (1d) de la préforme.

17. Appareil selon la revendication 16 **caractérisé en ce que** les moyens de pulvérisation (18) sont alimentés avec un matériau lubrifiant choisi parmi le groupe : huile silicone, huile végétale incorporant au moins un agent émulsifiant, mélange huile et cire végétales incorporant au moins un agent émulsifiant et au moins un agent antioxydant.

18. Installation de fabrication et de stockage de préformes plastiques dans un container (C) **caractérisée en ce qu'**elle comprend une machine d'injection (2 ;13) de préformes plastiques (P) qui est équipée en sortie d'un appareil de stockage (3 ; 3') selon l'une quelconque des revendications 13 à 17.

## Patentansprüche

1. Verfahren zur Lagerung von Kunststoffvorformen (P) in einem Container (C), **dadurch gekennzeichnet, dass** die Außenseite der Vorformen derart behandelt wird, dass diese Außenfläche gleitfähiger wird, und die Vorformen lose in einem Container (C) gelagert werden, wobei die Außenseite der Vorformen nach der Behandlung einen ausreichend geringen Reibbeiwert aufweist, dass die Lagerungsdichte (Anzahl von gelagerten Vorformen pro Volumeneinheit) deutlich größer als die Lagerungsdichte ist, die unter denselben Bedingungen mit nicht behandelten Vorformen erzielt worden wäre.

2. Verfahren nach Anspruch 1, **dadurch gekennzeichnet, dass** die Außenseite der Vorformen nach der Behandlung einen ausreichend geringen Reibbeiwert aufweist, dass die Lagerungsdichte (Anzahl von gelagerten Vorformen pro Volumeneinheit) um mindestens 10 % und vorzugsweise mindestens 15 % größer als die Lagerungsdichte ist, die unter denselben Bedingungen mit nicht behandelten Vorformen erzielt worden wäre.

3. Verfahren nach Anspruch 1 oder 2, **dadurch gekennzeichnet, dass** der Schritt der Behandlung der Vorformen darin besteht, auf die gesamte oder einen Teil der Außenfläche der Vorformen ein Schmiermittel aufzubringen.

4. Verfahren nach Anspruch 2, **dadurch gekennzeichnet, dass** das Mittel in folgender Gruppe ausgewählt wird: Silikonöl, Pflanzenöl, das mindestens einen Emulgator enthält, Mischung aus pflanzlichen Ölen und Wachsen, die mindestens einen Emulgator und mindestens ein Antioxidans enthält.

5. Verfahren nach Anspruch 4, **dadurch gekennzeichnet, dass** das Mittel in flüssiger Form aufgetragen wird.

6. Verfahren nach einem der Ansprüche 3 bis 5, **dadurch gekennzeichnet, dass** die Methode zum Auftragen des Mittels in folgender Gruppe ausgewählt wird: Zerstäubung, Einschmieren, Eintauchen.

7. Verfahren nach Anspruch 6, **dadurch gekennzeichnet, dass** die Vorformen in aufeinander folgenden Mengen zu (n) losen Vorformen durch Zerstäubung eines Schmiermittels auf jeder aufeinander folgenden Menge von (n) losen Vorformen behandelt werden.

8. Verfahren nach Anspruch 7, **dadurch gekennzeichnet, dass** jede aufeinander folgende Menge von (n) Vorformen lose mit Hilfe eines Förderers (4) bis zu einem Behandlungsbehälter (6) transportiert wird, der über dem Lagerungscontainer (C) der Vorformen angeordnet ist, dass bei jeder neuen Menge von losen Vorformen, die in dem Zwischenbehälter enthalten sind, eine Zerstäubung eines Schmiermittels auf die losen Vorformen dieser Menge durchgeführt wird und nach Ende der Zerstäubung der Boden des Behälters geöffnet wird, so dass die Vorformmenge durch die Schwerkraft in das Innere des Containers fällt.

9. Verfahren nach Anspruch 3, **dadurch gekennzeichnet, dass** jede Vorform (P) individuell bis zum Container (C) befördert wird, wobei jede Vorform in einer gegebenen Position ausgerichtet gehalten wird, und dass vor dem Einleiten jeder Vorform in den Container (C) das Schmiermittel auf die ausgerichtete Vorform (P) nur auf den Abschnitt der Vorform (P), der sich unter dem Kragen (1d) der Vorform erstreckt, aufgetragen wird.

10. Verfahren nach einem der Ansprüche 1 bis 9, **dadurch gekennzeichnet, dass** die Vorformen in den Container (C) unmittelbar nach dem Behandlungsschritt eingeleitet werden.

11. Verfahren nach einem der Ansprüche 1 bis 10, **dadurch gekennzeichnet, dass** der Container derart zum Vibrieren und/oder Schwingen gebracht wird, dass das von den in dem Container gelagerten Vorformen eingenommene Volumen verringert wird.

12. Verfahren zur Herstellung und Lagerung von Vorformen (P) aus Kunststoff, **dadurch gekennzeichnet, dass** Vorformen durch Kunststoffspritzguss in Serie hergestellt werden, und dass im Zuge der Herstellung der Vorformen die Vorformen on line in einem Container (C) gemäß dem in einem der Ansprüche 1 bis 11 vorgesehenen Verfahren gelagert werden.

13. Gerät (3) für die Lagerung von Vorformen (P) aus Kunststoff in einem Container (C), **dadurch gekennzeichnet, dass** es einen Behälter (6) für die Behandlung der Vorformen, der am oberen Teil offen und dessen Boden zur Gänze oder zum Teil gesteuert einziehbar ist, einen Förderer (4), dessen stromabwärtiges Ende (4b) über dem Behandlungsbehälter (6) angeordnet ist und der die Aufgabe hat, eine oder mehrere Vorformen automatisch zu dem Behandlungsbehälter zu befördern, mindestens eine Zerstäubungsdüse (9a) für ein Schmiermittel, die über dem Behandlungsbehälter angeordnet ist, umfasst.

14. Gerät nach Anspruch 13, **dadurch gekennzeichnet, dass** die Zerstäubungsdüse mit einem Schmiermittel gespeist wird, das in folgender Gruppe ausgewählt wird: Silikonöl, pflanzliches Öl, das mindestens einen Emulgator enthält, ein Gemisch aus pflanzlichen Ölen und Wachsen, das mindestens einen Emulgator und mindestens ein Antioxidans enthält.

15. Gerät nach Anspruch 14, **dadurch gekennzeichnet, dass** jede Zerstäubungsdüse (9a; 9b) derart vorgesehen ist, dass sie eine Wechseldrehbewegung entlang einer im Wesentlichen horizontalen Achse (10) mit einem begrenzten Winkel (A) ausführt.

16. Gerät (3') für die Lagerung von Vorformen (P) aus Kunststoff in einem Container (C), **dadurch gekennzeichnet, dass** es eine Maschine (15) zum Ordnen der Vorformen, die derart ausgeführt ist, dass sie mit losen Vorformen gespeist wird und am Ausgang die Vorformen nacheinander angeordnet liefert, so dass jede Vorform in einer vorbestimmten Position ausgerichtet ist, ein Weiterleitungssystem (16), das es ermöglicht, die Vorformen (P) am Ausgang der Maschine (15) zum Ordnen wieder aufzunehmen und sie einzeln zum Container (C) zu befördern, indem die Ausrichtung jeder Vorform aufrecht erhalten wird, und Mittel (18) zur Zerstäubung eines Schmiermittels umfasst, die auf der Bahn der Vorformen derart angeordnet sind, dass das Auftragen des Schmiermittels auf jede ausgerichtete Vorform (P) nur auf den Abschnitt der Vorform (P) ermöglicht wird, der sich unter dem Kragen (1d) der Vorform erstreckt.

17. Gerät nach Anspruch 16, **dadurch gekennzeichnet, dass** die Zerstäubungsmittel (18) mit einem Schmiermittel gespeist werden, das in folgender Gruppe ausgewählt wird: Silikonöl, pflanzliches Öl, das mindestens einen Emulgator enthält, Gemisch aus pflanzlichen Ölen und Wachsen, das mindestens einen Emulgator und mindestens ein Antioxidans enthält.

18. Anlage zur Herstellung und Lagerung von Vorformen aus Kunststoff in einem Container (C), **dadurch gekennzeichnet, dass** sie eine Spritzgussmaschine (2; 13) für Vorformen (P) aus Kunststoff umfasst, die am Ausgang mit einem Lagerungsgerät (3; 3') nach einem der Ansprüche 13 bis 17 versehen ist.

## Claims

1. A method of storing plastic preforms (P) in a container(C), **characterised in that** the outside faces of the preforms are treated so as to make said outside faces more slippery, and the preforms are stored in bulk in the container (C), with the outside faces of the preforms after treatment presenting a coefficient of friction that is low enough to ensure that the packing density, i.e. the number of preforms stored per unit volume, is greater than the packing density that would be obtained under the same conditions with non-treated preforms.

2. A method according to claim 1, **characterised in that** the outside faces of the preforms after treatment present a coefficient of friction that is low enough for the packing density, i.e. the number of preforms stored per unit volume, to be at least 10% and preferably at least 15% greater than the packing density that would be obtained under the same conditions with untreated preforms.

3. A method according to claim 1 or 2, **characterised in that** the step of treating the preforms consists in applying a lubricant over all or part of the outside surfaces of the preforms.

4. A method according to claim 2, **characterised in that** the lubricant is selected from the group: silicone oil; vegetable oil incorporating at least one emulsifying agent; and a mixture of vegetable oil and wax incorporating at least one emulsifying agent and at least one antioxidizing agent.

5. A method according to claim 4, **characterised in that** the lubricant is applied in liquid form.

6. A method according to any one of claims 3 to 5, **characterised in that** the method of applying the lubricant is selected from the group: spraying, coating, immersing.

7. A method according to claim 6, **characterised in that** the preforms are treated in successive batches of (n) preforms in bulk, and by spraying a lubricant onto each successive batch of (n) preforms in bulk.

8. A method according to claim 7, **characterised in that** each successive batch of (n) preforms is conveyed in bulk by means of a conveyor (4) to a treatment receptacle (6) positioned above the container (C) for storing the preforms, **in that** each new batch of preforms in bulk contained in the intermediate receptacle is subjected to a lubricant being sprayed onto the preforms in bulk of said batch, and at the end of spraying the bottom of the receptacle is opened so that the batch of preforms drops under gravity into the container.

9. A method according to claim 3, **characterised in that** each preform (P) is conveyed individually to the container (C) with each preform being maintained in a given orientation, and **in that** prior to each preform being introduced into the container (C) lubricant is applied to the oriented preform (P) solely on that portion of the preform (P) which extends beneath the collar (1 d) of the preform.

10. A method according to any one of claims 1 to 9, **characterised in that** the preforms are introduced into the container (C) immediately after the treatment step.

11. A method according to any one of claims 1 to 10, **characterised in that** the container is caused to vibrate and/or oscillate in such a manner as to reduce the volume occupied by the preforms stored in the container.

12. A method of manufacturing and storing plastic preforms (P), **characterised in that** injected plastic preforms are manufactured in series, and **in that** as preform manufacture progresses, the preforms are stored in line in a container (C) using the method referred to in any one of claims 1 to 11.

13. Apparatus (3) for storing plastic preforms (P) in a container (C), the apparatus being **characterised in that** it comprises a receptacle (6) for treating preforms, which receptacle is open on top, and has a bottom that is totally or partially retractable on command, a conveyor (4) having a downstream end (4b) positioned above the treatment receptacle (6), and serving to convey one or more preforms automatically to the treatment receptacle, and at least one spray nozzle (9a) for spraying a lubricant mounted over the treatment receptacle.

14. Apparatus according to claim 13, **characterised in that** the spray nozzle is fed with a lubricant selected from the group: silicone oil; vegetable oil incorporating at least one emulsifying agent; and a mixture of vegetable oil and wax incorporating at least one emulsifying agent and at least one antioxidizing agent.

15. Apparatus according to claim 14, **characterised in that** each spray nozzle (9a; 9b) is designed to be driven with reciprocating pivoting motion about a substantially horizontal axis (10) through a limited angle (A).

16. Apparatus (3') for storing plastic preforms (P) in a container (C), the apparatus being **characterised in that** it comprises a machine (15) for storing preforms, which machine is designed to be fed with preforms in bulk and to deliver preforms one after another at the outlet in such a manner that each preform is in a predetermined orientation, a transfer system (16) enabling preforms (P) to be taken from the outlet of the unscrambler (15), and to take them individually to the container (C) while maintaining the orientation of each preform, and means (18) for spraying a lubricant, which means are positioned on the path of the preforms so as to enable the lubricant to be applied to each oriented preform (P) only on the portion of the preform (P) that extends beneath the collar (1d) of the preform.

17. Apparatus according to claim 16, **characterised in that** the spray means (18) are fed with a lubricant selected from the group: silicone oil; vegetable oil incorporating at least one emulsifying agent; and a mixture of vegetable oil and wax incorporating at least one emulsifying agent and at least one antioxidizing agent.

18. An installation for manufacturing and storing plastic preforms in a container (C), the installation being **characterised in that** it comprises an injection machine (2; 13) for injecting plastic preforms (P) and fitted at its outlet with a storage appliance (3; 3') according to any one of claims 13 to 17.
